# EUROPEAN PATENT APPLICATION

(11) **EP 4 675 778 A1**
(43) Date of publication of application: **07.01.2026**
(21) Application number: 24764194.7
(22) Date of filing: 28.02.2024
(51) Int. Cl.: H01M 50/124, H01M 50/117, H01M 50/119, H01M 50/121, H01M 50/105, H01M 50/131

(54) **STAINLESS STEEL POUCH FILM FOR SECONDARY BATTERY**

(30) Priority: 28.02.2023 KR 20230027227; 27.02.2024 KR 20240028416
(71) Applicant: SBTL Advanced Materials Co. Ltd., Hwaseong-si, Gyeonggi-do 18559 (KR)
(72) Inventor: SHIM, Jun Ho, Seoul 08329 (KR); PARK, Sang Bean, Siheung-si, Gyeonggi-do 15030 (KR); LEE, Ju Sung, Hwaseong-si, Gyeonggi-do 18568 (KR); CHUN, Sang Wook, Hwaseong-si, Gyeonggi-do 18442 (KR)
(74) Representative: dompatent
(86) International application number: PCT/KR2024/002570
(87) International publication number: WO 2024/181795

(57) **Abstract**

The present invention relates to a stainless steel pouch film for a secondary battery, comprising: a stainless steel layer, any one of a first surface and a second surface being treated with chromate and corona; an outer resin layer formed on the first surface of the stainless steel layer; and an inner resin layer formed on the second surface of the stainless steel layer, wherein the outer resin layer comprises polyethylene terephthalate.

## Description

### [Technical Field]

This application is a National Stage Application of International Application No. PCT/KR2024/002570, filed on February 28, 2024, which claims priority to Korean Patent Application No. 10-2023-0027227 filed on February 28, 2023, and No. 10-2024-0028416 filed on February 27, 2024, the disclosures of which are incorporated herein by reference in their entireties.

The present disclosure relates to a stainless-steel pouch film for a secondary battery.

### [Background Art]

Lithium-ion secondary batteries are widely used in devices or parts such as mobile phones, laptop computers, tablets, power tools, and electric vehicles because they have excellent energy density and output characteristics. In particular, they are widely used in mobile phones and mobile devices that require miniaturization and light weight. Previously, aluminum alloys have been used as packaging materials for these batteries due to their light weight, formability, and economical aspects.

Recently, secondary batteries have been used and applied explosively for various purposes, from IT devices to major components of the power supply of electric vehicles based on various advantages such as high energy density and excellent output. The pouch film is an outer material that encloses the electrode group and electrolyte solution of these secondary batteries, and must satisfy the required properties such as adhesion between the metal thin film and the polymer layer, heat-sealing strength, electrolyte resistance, airtightness, moisture permeability, and formability.

The pouch film is largely composed of an outer layer, a metal barrier layer, and an inner sealant layer. The metal barrier layer is required to have barrier properties against water vapor or other gases, electrolyte resistance, formability, etc. For example, aluminum (Al) or an aluminum alloy is used as the metal barrier layer, and although aluminum is currently the most commonly used, there is still a need to develop new materials.

The aluminum pouch film for these secondary batteries includes an outer resin layer using a polymer resin or the like on an aluminum thin-film to be protected from the electrode assembly and subsequent impact, and an inner resin layer using polyolefin or the like on the other side of the aluminum thin-film.

However, the secondary battery using the aluminum pouch film as described above may be damaged for various reasons in various environments. Normally, automobiles are exposed to various environments and used for long periods of time, and at this time, the battery needs to be protected from high temperature, high humidity, and mechanical shock. In the case of automobiles, there is heat flowing in from the outside and heat is generated during charging and discharging of the large-capacity battery. This heat can cause microscopic pinholes or cause the pouch film to be damaged internally, thereby causing cracks in the internal adhesive layer and exposing the aluminum layer to the electrolyte solution, etc. There is a problem in that the aluminum layer exposed to the electrolyte solution in this way may corrode due to a chemical reaction with the electrolyte solution and oxygen or moisture that has penetrated or diffused into the battery, thereby generating corrosive gases and causing a swelling phenomenon that expands the inside of the battery.

In addition, the use of secondary batteries as a power source for electric and hybrid vehicles is rapidly expanding, but due to the nature of vehicles that are constantly exposed to moisture in various natural environments, if a small amount of moisture flows into the inside of the battery for a long period of time and then accumulates inside the battery, there is a risk of fire or explosion due to the internal chemical reaction along with the degradation of the performance of the battery. Accordingly, it will be necessary to provide improved gas barrier performance to the outer material of the battery that is exposed for a long period of time. More specifically, if LiPF₆ reacts with water and oxygen to generate hydrofluoric acid (HF), a corrosive gas, it may react with aluminum and thus cause a rapid exothermic reaction, and as a secondary reaction, if it is adsorbed on the surface of aluminum and penetrates into the tissue, the brittleness of the tissue increases, and thus cracks may occur in the pouch film even under a small impact, which may cause leakage of the electrolyte solution, and thus may cause a reaction between lithium and the atmosphere, which may result in ignition.

Therefore, in order to solve the above problems, it is being studied for a technology of pouch film using stainless steel (Steel Use Stainless, SUS) instead of aluminum.

### [Patent Document]

(Patent Document 1) KR 10-1628993 B1, "Stainless Use Steel pouch film for the Secondary Battery, the Pack containing the same and the Secondary Battery containing the same"

### [Disclosure]

### [Technical Problem ]

It is an object of the present invention to provide a stainless pouch film for a secondary battery having excellent corrosion resistance and chemical resistance even when the battery is exposed to physical or chemical shock or stress from the outside, as well as excellent binding strength and adhesive strength with an adhesive layer inside the pouch.

### [Technical Solution ]

In order to achieve the object described above, the present invention provides a stainless steel pouch film for a secondary battery, comprising:
a stainless steel layer, at least one of a first surface and a second surface being treated with chromate and corona;
an outer resin layer formed on the first surface of the stainless steel layer; and
an inner resin layer formed on the second surface of the stainless steel layer;
wherein the outer resin layer contains polyethylene terephthalate.

### [Advantageous Effects ]

The stainless steel pouch film for a secondary battery of the present invention has the advantage of not only having excellent corrosion resistance and chemical resistance even when the battery is exposed to physical or chemical shock or stress from the outside, but also suppressing the occurrence of cracks in the adhesive layer inside the pouch and preventing delamination since at least one of a first surface and a second surface of the stainless steel layer is treated by chromate and corona.

### [Best Mode]

Hereinafter, the present invention will be described in more detail.

The present invention relates to a stainless steel pouch film for a secondary battery comprising, a stainless steel layer, at least one of a first surface and a second surface being treated with chromate and corona;
an outer resin layer formed on the first surface of the stainless steel layer; and
an inner resin layer formed on the second surface of the stainless steel layer,
wherein the outer resin layer contains polyethylene terephthalate.

Hereinafter, each component of the stainless steel pouch film for a secondary battery of the present invention will be described in detail.

### Stainless steel layer

In the stainless steel pouch film for a secondary battery of the present invention, the type of stainless steel constituting the stainless steel layer may comprise one type selected from the group consisting of austenitic series, ferritic series, and martensitic series, but is not limited thereto.

The above-described ferritic and martensitic steels have significantly lower corrosion resistance than the austenitic steels and are magnetic. Magnetism can affect the finished device using the secondary battery using the stainless steel pouch film, for example, an environment comprising the use of magnets or wireless charging. Therefore, in exemplary embodiments of the present invention, it may be most preferable to use an austenitic steel as the stainless steel.

Examples of the steel may comprise SUS304, SUS430, and SUS316. In addition, the type of surface finish of stainless steel is not particularly limited, and examples of the type may comprise BA, 2B, 2D, No.4, and HL.

In an exemplary embodiment, 304, 304L, 304J1, 316, and 316L, etc., which have excellent corrosion resistance and processability, can be used.

Preferably, the thickness of the stainless steel layer is 20 to 60 *µ*m, and the total thickness of the pouch film using the same is in the range of 110 to 160 *µ*m.

If the thickness of the stainless steel layer is greater than 60*µ*m, the rolling process is easy, but the formability as an outer material for batteries is significantly reduced, making it difficult to apply. From this point of view, the thickness of the stainless steel layer for the outer material is preferably 20 to 60 *µ*m. For thicknesses exceeding 40 *µ*m and up to 60 *µ*m, formability is almost at the same level, but steel less than 20 *µ*m is very difficult to roll process and is difficult to apply to mass production due to the rapid increase in manufacturing cost.

In the present invention, the thickness of the stainless steel layer can be appropriately set according to the weight, strength, processing depth, etc. required as the outer material of the battery. From the viewpoint of reducing the weight of the outer material of the battery, the thinner the stainless steel layer, the more desirable it is. However, as the thickness of the layer is made thinner, the strength and processability are decreased, and the manufacturing cost is increased. Considering the strength and processing depth of the outer material of the battery that are generally required, the thickness of the stainless steel layer is preferably 20 to 150 *µ*m. In addition, from the viewpoint of securing strength as the outer material of the battery, it is preferable that the thickness of the stainless steel layer be 40 to 60 *µ*m.

It is preferable that the weight ratio of each component included in the stainless steel layer described above is 0.02 to 0.1 wt% of carbon, 0.1 to 1.0 wt% of silicon, 10 to 30 wt% of chromium, and 0.05 to 0.3 wt% of nickel. In addition, among the mechanical properties, if the yield strength is less than 100 N/mm², the tensile strength is less than 200 N/mm², and the elongation is less than 20%, the formability is reduced when manufactured into a pouch film, and pin holes and micro cracks are likely to occur. In addition, if the yield strength is greater than 300 N/mm², the tensile strength is greater than 700 N/mm², and the elongation is greater than 60%, the formability is improved when manufactured into a pouch film, but since the forming stress remains in the stainless steel after forming, wrinkles may occur at room temperature at the surfaces where the forming surfaces meet and at the vertices due to the residual stress inside the material after a certain period of time, which may cause fatigue failure. In order to prevent the above-mentioned deterioration of physical properties, it is preferable that the mechanical properties have a yield strength of 100 to 300 N/mm², a tensile strength of 200 to 700 N/mm², and an elongation of 20 to 60%.

In addition, at least one of the first surface and the second surface of the stainless steel layer of the present invention may be treated by chromate and corona, and preferably, the first surface and the second surface may be treated by chromate and corona.

The chromate treatment is a type of chemical conversion treatment, in which a thin insoluble chromate (salt of chromic acid) film containing a chromium component is formed on at least one of the first surface and the second surface of the stainless steel layer. To this end, the stainless steel layer is immersed in an aqueous solution containing chromium ions (Cr³⁺). Then, the chromium ions undergo an oxidation reaction to generate insoluble chromium oxide on at least one of the first surface and the second surface of the stainless steel layer, thereby forming a chromate film. That is, at least one of the first surface and the second surface of the stainless steel layer of the present invention may have a chromate film containing chromium formed thereon.

Specifically, chromate treatment means treatment with a solution containing anhydrous chromic acid, chromic acid, dichromic acid, chromate or dichromate. The solution used for chromate treatment may contain elements such as Co, Fe, Ni, Mo, Zn, Ta, Cu, Al, P, W, Sn, As, and Ti (in any form such as metal, alloy, oxide, nitride, sulfide, etc.). An example of aqueous solutions containing the chromium ions may include an aqueous solution of anhydrous chromic acid or an aqueous solution of potassium dichromate, which may additionally contain zinc ions.

The corona treatment may be performed after the chromate treatment of at least one of the first surface and the second surface of the stainless steel layer, preferably after the chromate treatment of the first surface and the second surface.

The corona treatment may be performed by a method known in the art, and the roughness of at least one of the first surface and the second surface of the chromate treated stainless steel may be improved by the corona treatment, thereby improving the mechanical bonding strength of the stainless steel pouch film for a secondary battery.

### Outer resin layer

In the stainless steel pouch film for a secondary battery of the present invention, since the outer resin layer corresponds to a portion that directly contacts the hardware, it is preferable that it be a resin having insulation properties. Accordingly, the resin used as the outer resin layer may be polyethylene terephthalate.

In addition, in addition to the polyethylene terephthalate, a polyester resin such as polybutylene terephthalate, polyethylene naphthalate, polybutylene naphthalate, copolymerized polyesters, or polycarbonate may be additionally included, or a polyamide resin, a polyimide resin, or a copolymer of polyamide and polyimide may be additionally included, and preferably, a copolymer of polyamide and polyimide may be additionally included.

As the copolymerized polyesters, specifically, polyethylene terephthalate, polybutylene terephthalate, polyethylene naphthalate, polybutylene naphthalate, polyethylene isophthalate, polycarbonate, copolymerized polyesters with ethylene terephthalate as the main repeating unit, copolymerized polyesters with butylene terephthalate as the main repeating unit and the like may be included. In addition, as the copolymerized polyesters with ethylene terephthalate as the main repeating unit, specifically, copolymer polyesters formed by polymerizing ethylene terephthalate as the main repeating unit with ethylene isophthalate, such as polyethylene (terephthalate/isophthalate), polyethylene (terephthalate/adipate), polyethylene (terephthalate/sodium sulfo isophthalate), polyethylene (terephthalate/sodium isophthalate), polyethylene (terephthalate/phenyl-dicarboxylate), polyethylene (terephthalate/decanedicarboxylate) and the like may be included.

In addition, as the copolymerized polyesters with butylene terephthalate as the main repeating unit, specifically, copolymer polyesters formed by polymerizing butylene terephthalate as the main repeating unit with butylene isophthalate, such as polybutylene(terephthalate/adipate), polybutylene(terephthalate/sebacate), polybutylene (terephthalate/decanedicarboxylate), polybutylene naphthalate and the like may be included. These polyesters may be used alone or in a combination of two or more types.

The outer resin layer may comprise polyamideimide, inorganic particles, and an amide slip agent.

By comprising the inorganic particles and amide slip agent, the slipperiness, processability and formability of the stainless steel pouch film for a secondary battery can be improved.

The inorganic particles may be at least one selected from the group consisting of spherical silicon beads, silica gel and spherical alumina silica, and preferably may be spherical silicon beads.

In addition, the amide slip agent may be, but is not limited to, erucamide.

In the outer resin layer, if the concentration of the inorganic particles is less than 50 ppm or the concentration of the amide slip agent is less than 50 ppm, the slip agent is not saturated inside the resin layer and does not migrate to the outside of the resin layer over time, failing to reduce the friction coefficient of the surface. On the contrary, if the concentration of the inorganic particles exceeds 400 ppm or the concentration of the amide slip agent exceeds 400 ppm, the concentration of the slip agent transferred to the surface of the resin layer becomes excessive, thereby contaminating the rolls of the equipment during the production of the pouch film and causing defects in the appearance of the pouch film. Therefore, as the concentration of the slip agent, the inorganic particles may be contained in an amount of 50 to 400 ppm and the amide slip agent may be contained in an amount of 50 to 400 ppm.

### Inner resin layer

In the stainless steel pouch film for a secondary battery of the present invention, the inner resin layer may be formed on the second surface of the stainless steel layer wherein at least one of the first surface and the second surface is treated with chromate and corona.

The inner resin layer is not particularly limited in type as long as it is used in the art, and may be selected from the group consisting of polyolefin-based resin such as polyethylene, polypropylene, and polybutylene; ethylene copolymer; propylene copolymer; polyester-based resin; polyamide-based resin; polycarbonate-based resin; fluorine-based resin; silicone-based resin; acrylic resin; ethylene-propylene-diene-monomer rubber (EPDM); and mixtures thereof. Preferably, polyolefin-based resin or a mixed resin of polybutadiene and polyolefin may be used.

As specific examples of the polyolefin, polyethylene such as low density polyethylene, medium density polyethylene, high density polyethylene, and linear low density polyethylene; polypropylene such as homopolypropylene, block copolymer of polypropylene (e.g., block copolymer of propylene and ethylene), random copolymer of polypropylene (e.g., random copolymer of propylene and ethylene); and terpolymer of ethylene-butene-propylene, etc. may be used.

If polyolefin such as polyethylene or polypropylene or a copolymer thereof is used for the inner resin layer, it is preferable because it not only has the physical properties required as a packaging material for a secondary battery such as good heat sealing property, moisture resistance, and heat resistance, but also has excellent processability such as lamination. The thickness of the inner resin layer is preferably 20 to 100 *µ*m, and more preferably 30 to 80 *µ*m, taking into account formability, insulation property, and electrolyte resistance. If the above range is not satisfied, there may be a problem that the formability, the insulation property, and the electrolyte resistance are decreased.

### Adhesive layer

In the stainless steel pouch film for a secondary battery of the present invention, a first adhesive layer may be laminated between the stainless steel layer, in which at least one of the first surface and the second surface is treated with chromate, and the outer resin layer, and a second adhesive layer may be laminated between the stainless steel layer, in which at least one of the first surface and the second surface is treated with chromate, and the inner resin layer.

### First adhesive layer

The first adhesive layer is a layer that enhances adhesion between the stainless steel layer and the outer resin layer. The first adhesive layer is formed by an adhesive resin that can bond the outer resin layer and the stainless steel layer. The adhesive resin used to form the first adhesive layer may be a two-component curing type adhesive resin or a one-component curing type adhesive resin. In addition, the bonding mechanism of the adhesive resin used to form the first adhesive layer is not particularly limited, and may be any of a chemical reaction type, a solvent volatilization type, a heat melting type, a heat pressure type, etc.

As the adhesive resin that can be used in forming the first adhesive layer, polyester-based resins such as polyethylene terephthalate, polybutylene terephthalate, polyethylene naphthalate, polybutylene naphthalate, polyethylene isophthalate, polycarbonate, and copolymerized polyester; polyether-based resins; polyurethane-based resins; epoxy-based resins; phenol resin-based resins; polyamide-based resins such as nylon 6, nylon 66, nylon 12, and copolymerized polyamide; polyolefin-based resins such as polyolefin, acid-modified polyolefin, and metal-modified polyolefin; polyvinyl acetate-based resins; cellulose-based resins; (meth)acrylic resins; polyimide-based resins; amino resins such as urea resin and melamine resin; rubbers such as chloroprene rubber, nitrile rubber, and styrene-butadiene rubber; silicone-based resins; or fluorinated ethylenepropylene copolymers, etc. may be used. The adhesive resins may be used alone or in a combination of two or more thereof.

As the adhesive resin, if two or more types of resins are used, the combination is not particularly limited, but examples thereof may include mixed resins of polyamide and acid-modified polyolefin, mixed resins of polyamide and metal-modified polyolefin, mixed resins of polyamide and polyester or polyester and acid-modified polyolefin, and mixed resins of polyester and metal-modified polyolefin, etc. Among these, in order to ensure excellent malleability and ductility, durability or strain inhibitory action under high humidity conditions, and deterioration inhibitory action during heat sealing, and suppress the decrease in lamination strength between the base layer and the metal layer to effectively suppress the occurrence of delamination, preferably, a polyurethane-based two-component curing type adhesive resin; or polyamide, polyester, or a mixed resin obtained by mixing these with modified polyolefin may be used.

In addition, as a known adhesive material, for example, a polyurethane-based adhesive which contains a main material comprising a polyol such as polyester polyol, polyether polyol, acrylic polyol, or carbonate polyol, and a curing agent comprising a bifunctional or higher isocyanate compound may be used. By causing the curing agent to act on the main material, a polyurethane-based resin is formed.

First, polyol can be used as a component of the adhesive. As the polyol compound used in the urethane-type adhesive, for example, polyester polyol, polyester polyurethane polyol, polyether polyol, polyether polyurethane polyol, etc. may be used. The hydroxyl equivalent and weight average molecular weight of these polyol compounds are not particularly limited as long as they ultimately satisfy the above physical properties in relation to the isocyanate compound to be combined, but for example, the hydroxyl equivalent (number/mol) may be 0.5 to 2.5, preferably 0.7 to 1.9, and the weight average molecular weight may be 500 to 120,000, preferably 1,000 to 80,000. Among these polyol compounds, it is preferable to use polyester polyol, polyester polyurethane polyol, and polyether polyurethane polyol. These polyol compounds may be used alone or in combination of two or more thereof.

As the polyester polyol, it is possible to use a material obtained by reacting at least one polybasic acid and at least one diol. As the polybasic acid, dibasic acids such as aliphatic dibasic acids such as succinic acid, glutaric acid, adipic acid, pimelic acid, suberic acid, azelaic acid, sebacic acid, and brassylic acid, and aromatic dibasic acids such as isophthalic acid, terephthalic acid, and naphthalene dicarboxylic acid may be used. As the diol, aliphatic diols such as ethylene glycol, propylene glycol, butanediol, neopentyl glycol, methyl pentanediol, hexanediol, heptanediol, octanediol, nonanediol, decanediol, and dodecanediol, alicyclic diols such as cyclohexanediol and hydrogenated xylylene glycol, and aromatic diols such as xylylene glycol may be used.

In addition, as the polyester polyol, polyester urethane polyol, etc., in which the hydroxyl groups at both terminals of the polyester polyol are chain-extended using a single isocyanate compound or an adduct, biuret or isocyanurate containing at least one isocyanate compound. As the isocyanate compounds, for example, 2,4- or 2,6-tolylene diisocyanate, xylylene isocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, isopropylidene dicyclohexyl-4,4'-diisocyanate, etc. may be used.

As the acrylic polyol, a copolymer whose main component is poly(meth)acrylic acid can be used. As the copolymer, materials obtained by copolymerizing hydroxyl group-containing monomers such as 2-hydroxyethyl (meth)acrylate, 2-hydroxypropyl (meth)acrylate, etc.; alkyl (meth)acrylate monomers containing methyl group, ethyl group, n-propyl group, i-propyl group, n-butyl group, i-butyl group, t-butyl group, 2-ethylhexyl group, or cyclohexyl group as an alkyl group; amide group-containing monomers such as (meth)acrylamide, N-alkyl (meth)acrylamide, N,N-dialkyl (meth)acrylamide (as an alkyl group, a methyl group, an ethyl group, an n-propyl group, an i-propyl group, an n-butyl group, an i-butyl group, a t-butyl group, a 2-ethylhexyl group, a cyclohexyl group, etc.), N-alkoxy (meth)acrylamide, N,N-dialkoxy (meth)acrylamide(as an alkoxy group, a methoxy group, an ethoxy group, a butoxy group, an isobutoxy group, etc.), N-methylol (meth)acrylamide, and N-phenyl (meth)acrylamide, etc.; glycidyl group-containing monomers such as glycidyl (meth)acrylate, allyl glycidyl ether, etc.; silane-containing monomers such as (meth)acryloxypropyl trimethoxysilane, (meth)acryloxypropyl triethoxysilane, etc.; isocyanate group-containing monomers such as (meth)acryloxypropyl isocyanate, etc. can be used. As the carbonate polyol, it is possible to use a material obtained by reacting a carbonate compound with a diol. As the carbonate compound, dimethyl carbonate, diphenyl carbonate, ethylene carbonate, etc. can be used. As the diol, aliphatic diols such as ethylene glycol, propylene glycol, butanediol, neopentyl glycol, methylpentanediol, hexanediol, heptanediol, octanediol, nonanediol, decanediol, and dodecanediol, alicyclic diols such as cyclohexanediol and hydrogenated xylylene glycol, and aromatic diols such as xylylene glycol can be used.

In addition, it is possible to use a polycarbonate urethane polyol in which the terminal hydroxyl group of the carbonate polyol is chain-extended by the above-described isocyanate compound.

Next, isocyanate can be used as a component of the adhesive.

As the isocyanate compound used in the urethane-type adhesives, for example, polyisocyanates, adducts thereof, isocyanurate modified forms thereof, carbodiimide modified forms thereof, allophanate modified forms thereof, biuret modified forms thereof, etc. can be used. As the polyisocyanates, specifically, aromatic diisocyanates such as diphenylmethane diisocyanate (MDI), polyphenylmethane diisocyanate (polymeric MDI), toluene diisocyanate (TDI), hexamethylene diisocyanate (HDI), bis(4-isocyanatecyclohexyl)methane (H12MDI), isophorone diisocyanate (IPDI), 1,5-naphthalene diisocyanate (1,5-NDI), 3,3'-dimethyl-4,4'-diphenylene diisocyanate (TODI), xylene diisocyanate (XDI); aliphatic diisocyanates such as tramethylene diisocyanate, hexamethylene diisocyanate, trimethylhexamethylene diisocyanate, and isophorone diisocyanate; alicyclic diisocyanates such as 4,4'-methylenebis(cyclohexylisocyanate), isophorone diisocyanate, etc. can be used. As the adduct, specifically, those in which trimethylolpropane, glycol, etc. are added to the polyisocyanate can be used. Among these isocyanate compounds, preferably, polyisocyanates and adducts thereof; more preferably, aromatic diisocyanates, adducts thereof, and isocyanurate modified forms thereof; more preferably, MDI, polymeric MDI, TDI, adducts thereof, and isocyanurate modified forms thereof; and particularly preferably, adducts of MDI, adducts of TDI, polymeric MDI, and isocyanurate modified forms of TDI can be used. These isocyanate compounds may be used alone, or in a combination of two or more thereof.

As the difunctional or higher isocyanate compound used as the hardener, it is possible to use the isocyanate compound of the kind used as the chain-extending agent, and although repeated, a single isocyanate compound selected from 2,4- or 2,6-tolylene diisocyanate, xylylene isocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, isopropylidene dicyclohexyl-4,4'-diisocyanate, or an adduct, a biuret, or an isocyanurate comprising at least one isocyanate compound selected from the isocyanate compounds may be used.

The mixing amount of the curing agent is preferably 1 to 100 parts by weight, more preferably 5 to 50 parts by weight, based on 100 parts by weight of the main material. If the mixing amount is less than 1 part by weight, there is a concern that performances such as adhesion or electrolyte solution resistance may not be realized. If the mixing amount exceeds 100 parts by weight, there is a concern that excessive isocyanate groups may exist, and the quality of the adhesive film may be affected by the residual unreacted substances, or the hardness may be affected.

In addition, to promote adhesion, it is also possible to mix a carbodiimide compound, an oxazoline compound, an epoxy compound, a phosphorus compound, a silane coupling agent, etc. into the polyurethane-based adhesive.

As the carbodiimide compound, N,N'-di-o-toluyl carbodiimide, N,N'-diphenyl carbodiimide, N,N'-di-2,6-dimethylphenyl carbodiimide, N,N'-bis(2,6-diisopropylphenyl)carbodiimide, N,N'-dioctyldecyl carbodiimide, N-triyl-N'-cyclohexyl carbodiimide, N,N'-di-2,2-di-t-butylphenyl carbodiimide, N-triyl-N'-phenyl carbodiimide, N,N'-di-p-nitrophenyl carbodiimide, N,N'-di-p-aminophenyl carbodiimide, N,N'-di-p-hydroxyphenyl carbodiimide, N,N'-dicyclohexyl carbodiimide and N,N'-di-p-toluyl carbodiimide, etc. may be used. As the oxazoline compounds, monooxazoline compounds such as 2-oxazoline, 2-methyl-2-oxazoline, 2-phenyl-2-oxazoline, 2,5-dimethyl-2-oxazoline, 2,4-diphenyl-2-oxazoline, and dioxazoline compounds such as 2,2'-(1,3-phenylene)-bis(2-oxazoline), 2,2'-(1,2-ethylene)-bis(2-oxazoline), 2,2'-(1,4-butylene)-bis(2-oxazoline), 2,2'-(1,4-phenylene)-bis(2-oxazoline) may be used.

As the epoxy compound, diglycidyl ethers of aliphatic diols such as 1,6-hexanediol, neopentyl glycol, and polyalkylene glycol, polyglycidyl ethers of aliphatic polyols such as sorbitol, sorbitan, polyglycerol, pentaerythritol, diglycerol, glycerol, and trimethylolpropane, polyglycidyl ethers of alicyclic polyols such as cyclohexane dimethanol, diglycidyl esters or polyglycidyl esters of aliphatic, aromatic polycarboxylic acids such as terephthalic acid, isophthalic acid, naphthalene dicarboxylic acid, trimellitic acid, adipic acid, and sebacic acid, diglycidyl ethers or polyglycidyl ethers of polyphenols such as resorcinol, bis-(p-hydroxyphenyl)methane, 2,2-bis-(p-hydroxyphenyl)propane, tris-(p-hydroxyphenyl) methane, and 1,1,2,2-tetrakis(p-hydroxyphenyl)ethane, N-glycidyl derivatives of amines such as N,N'-diglycidylaniline, N,N,N-diglycidyltoluidine, and N,N,N',N'-tetraglycidyl-bis-(p-aminophenyl)methane, triglycidyl derivatives of aminophenols, triglycidyltris(2-hydroxyethyl)isocyanurate, triglycidyl isocyanurate, orthocresol-type epoxy, phenol novolac-type epoxy resin, etc. can be used.

As the phosphorus compound, tris(2,4-di-t-butylphenyl)phosphite, tetrakis(2,4-di-t-butylphenyl)-4,4'-biphenylenephosphonite, bis(2,4-di-t-butylphenyl)pentaerythritol-di-phosphite, bis(2,6-di-t-butyl-4-methylphenyl)pentaerythritol-di-phosphite, 2,2-methylene bis(4,6-di-t-butylphenyl)octyl phosphite, 4,4'-butylidene-bis(3-methyl-6-t-butylphenyl-di-tridecyl)phosphite, 1,1,3-tris(2-methyl-4-ditridecyl phosphite-5-t-butyl-phenyl)butane, tris(mixed mono- and di-nonylphenyl)phosphite, tris(nonylphenyl)phosphite, 4,4'-isopropylidene bis(phenyl-dialkylphosphite), etc. may be used.

As the silane coupling agent, it is possible to use various silane coupling agents, such as vinyltriethoxysilane, vinyltris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyl trimethoxysilane, γ-aminopropyltriethoxysilane, N-β-(aminoethyl)-γ-aminopropyltrimethoxysilane.

As the adhesive used for forming the first adhesive layer that satisfies the physical properties of the stainless steel pouch film for the secondary battery of the present invention, preferably, a urethane-type adhesive comprising at least one polyol compound selected from the group consisting of polyester polyol, polyesterpolyurethane polyol, polyether polyol, and polyetherpolyurethane polyol, and at least one isocyanate-based compound selected from the group consisting of aromatic diisocyanates, adducts thereof, and isocyanurate-modified forms thereof; more preferably, a urethane-type adhesive comprising at least one polyol compound selected from the group consisting of polyester polyol, polyesterpolyurethane polyol, polyether polyol, and polyetherpolyurethane polyol, and at least one isocyanate-based compound selected from the group consisting of MDI, polymeric MDI, TDI, adducts thereof, and isocyanurate-modified forms thereof may be used.

In addition, in the adhesive containing the polyol compound (main material) and the isocyanate-based compound (curing agent), the ratio thereof is appropriately set depending on the above physical properties to be provided in the adhesive layer, but for example, the ratio of the isocyanate group of the isocyanate-based compound per 1 mol of the hydroxyl group of the polyol compound may be 1 to 30 mol, preferably 3 to 20 mol.

The thickness of the first adhesive layer is preferably 2 to 10 *µ*m, more preferably 3 to 5 *µ*m, taking into consideration the adhesion to the outer resin layer and the thickness after molding. If the thickness is less than 2 *µ*m, the adhesion is poor, and if it exceeds 10 *µ*m, there may be a problem that cracks occur and so on.

### Second adhesive layer

The second adhesive layer is a layer that increases adhesion between the inner resin layer and the stainless steel layer.

In the stainless steel pouch film for a secondary battery of the present invention, as the second adhesive layer, polyurethane, a heat-adhesive olefin-based resin, an acid-modified polyolefin resin, or an epoxy resin may be used. As a specific example of the second adhesive layer, maleic anhydride polypropylene (MAHPP) may be used.

Examples of the heat-adhesive olefin-based resin may include polyethylene, ethylene-α-olefin copolymer, ethylene-acrylic acid copolymer, ethylene-methacrylic acid copolymer, ethylene-acrylic acid ester copolymer, ethylene-methacrylic acid ester copolymer, ethylene-vinyl acetate copolymer, ionomers, polypropylene, maleic anhydride modified polypropylene, ethylene-propylene copolymer, and propylene-1-butene-ethylene copolymer, etc. and preferably, may include at least one olefin-based resin selected from the group consisting of polypropylene, ethylene-propylene copolymer, and propylene-1-butene-ethylene copolymer.

The acid-modified polyolefin-based resin is a polymer modified by graft polymerization of polyolefin with an unsaturated carboxylic acid. As the polyolefin to be acid-modified, specifically, polyethylenes such as low density polyethylene, medium density polyethylene, high density polyethylene, or linear low density polyethylene; crystalline or amorphous polypropylene such as homo polypropylene, block copolymer of polypropylene (for example, block copolymer of propylene and ethylene), random copolymer of polypropylene (for example, random copolymer of propylene and ethylene); terpolymer of ethylene-butene-propylene, etc. can be used. In terms of heat resistance, preferably, polyolefin having at least propylene as a constituent monomer, more preferably, a terpolymer of ethylene-butene-propylene and a random copolymer of propyleneethylene can be used. As the unsaturated carboxylic acid used for modification, for example, maleic acid, acrylic acid, itaconic acid, crotonic acid, maleic anhydride, itaconic anhydride, etc. may be used. Among these unsaturated carboxylic acids, maleic acid and maleic anhydride are preferable. Acid-modified polyolefins may be used alone or in a combination of two or more.

The second adhesive layer preferably has a thickness of 2 to 10 *µ*m, and more preferably has a thickness of 3 to 5 *µ*m, taking into consideration the adhesion to the inner layer and the thickness after molding. If the thickness is less than 2 *µ*m, the adhesion is poor, and if it exceeds 5 *µ*m, there may be a problem that cracks occur and so on.

When laminating the inner resin layer on one side of the second adhesive layer and laminating the stainless steel layer on the other side, there is no special limitation, but it is preferably possible to laminate by using a dry lamination method, a heat lamination method, or an extrusion lamination method.

### Method for manufacturing stainless steel pouch film for secondary battery

The stainless steel pouch film for a secondary battery of the present invention can be manufactured by a method comprising the steps of:
a) preparing a stainless steel layer;
b) chromate treating at least one of a first surface and a second surface of the stainless steel layer with an aqueous solution containing chromium ions (Cr³⁺);
c) corona treating at least one of the first surface and the second surface subjected to the chromate treatment;
d) forming an outer resin layer on the first surface of the stainless steel layer; and
e) forming an inner resin layer on the second surface of the stainless steel layer, wherein the outer resin layer contains polyethylene terephthalate.

### a) Step of preparing stainless steel layer

The stainless steel layer may be the same as the stainless steel layer described above.

### b) Step of chromate treating at least one of first surface and second surface of stainless steel layer with aqueous solution containing chromium ions (Cr³⁺)

At least one of the first surface and the second surface of the stainless steel layer, preferably the first surface and the second surface, may be treated with an aqueous solution containing chromium ions (Cr³⁺). The treatment with the aqueous solution containing the chromium ions may be immersing the stainless steel layer in the aqueous solution containing the chromium ions.

The aqueous solution may be, but is not limited to, an aqueous solution of anhydrous chromic acid or an aqueous solution of potassium dichromate. In addition, the aqueous solution may additionally contain zinc ions.

### c) Step of corona treating at least one of first surface and second surface subjected to the chromate treatment

This step is a step of corona-treating at least one of the first surface and the second surface subjected to the chromate treatment, and the conditions for corona treatment are not particularly limited in the present invention.

### d) Step of forming outer resin layer on first surface of the stainless steel layer

In the step of forming the outer resin layer on the first surface of the stainless steel layer of the stainless steel pouch film for a secondary battery of the present invention, the outer resin layer is formed by laminating the polyethylene terephthalate using a dry lamination method or an extrusion lamination method. When laminating the outer resin layer, the thickness of the laminated outer resin layer is preferably 10 to 30 *µ*m, and particularly preferably 12 to 25 *µ*m. If the thickness of the outer resin layer does not satisfy the above range, that is, if it is less than 10*µ*m, the physical properties deteriorate and it is easily torn, and if it exceeds 30*µ*m, there is a problem that the formability is deteriorated.

In addition, in the step of bonding the outer resin layer to the first surface of the stainless steel layer, a urethane-based adhesive, etc. can be used as the first adhesive layer for bonding the stainless steel layer and the outer resin layer.

### e) Step of forming inner resin layer on second surface of the stainless steel layer

In the step of bonding the inner resin layer to the second surface of the stainless steel layer of the stainless steel pouch film for a secondary battery of the present invention, polyurethane, acid-modified polyolefin resin, or epoxy may be used as the second adhesive layer for bonding the stainless steel layer and the inner resin layer, and as a specific example, maleic anhydride polypropylene (MAHPP) may be used.

The thickness of the second adhesive layer is preferably 2 to 30 *µ*m, more preferably 3 to 15 *µ*m, taking into consideration the adhesiveness with the inner resin layer and the thickness after molding. If the thickness does not satisfy the above range, that is, if it is less than 2 *µ*m, the adhesiveness is poor, and if it exceeds 30 *µ*m, there may be a problem that cracks occur.

When laminating the inner resin layer on the stainless steel layer, there is no special limitation, but preferably, the inner resin layer can be laminated by using a dry lamination method or an extrusion lamination method.

As described above, although the preferred embodiments of the present invention have been described in detail, the scope of the present invention is not limited thereto, and various modifications and improvements made by those skilled in the art using the basic concept of the present invention defined in the following claims also fall within the scope of the present invention.

### Example 1

A thin film of SUS 304 series alloy (product from POSCO Co.) with a thickness of 40 *µ*m was used as a stainless steel layer.

The first surface and the second surface of the stainless steel layer were chromate-treated by immersing the stainless steel layer in an aqueous solution of anhydrous chromic acid (product from Poongwon Chemical Co.).

The chromate-treated first surface and second surface were corona-treated, and the corona-treatment was discharge-treated under the same conditions as the setting conditions of AC220V (input voltage)/10kW by a system having an aluminum metal bar (width 2.5 mm, bar spacing 10 mm) as an electrode.

In order to laminate an outer resin layer on the first surface of the stainless steel layer having the first surface and the second surface treated with chromate and corona, polyurethane adhesive resin (product from SK Chemicals Co.) was applied with a thickness of 4*µ*m using a gravure roll method, and then, polyethylene terephthalate (product from Hyosung Co.) was dry-laminated with a thickness of 25*µ*m to laminate a film of polyethylene terephthalate on a stainless steel layer.

Afterwards, in order to laminate an inner resin layer on the second surface of the stainless steel layer, a maleic anhydride modified polyolefin adhesive (product from Jo Kwang Paint Co.) was applied with a thickness of 4 *µ*m, and then cast polypropylene (product from Yusang Co.) was dry-laminated with a thickness of 40 *µ*m to laminate polypropylene on the stainless steel layer, thereby manufacturing a stainless steel pouch film for a secondary battery.

### Example 2

A stainless steel pouch film for a secondary battery was manufactured in the same manner as in the above Example 1, except that an outer resin layer is laminated to the first surface of the stainless steel layer by dry-laminating a mixture containing polyethylene terephthalate, 100 ppm of spherical silicone beads, and 100 ppm of an amide slip agent.

### Comparative Example 1

An aluminum pouch film for a secondary battery was manufactured in the same manner as in the above Example 1, except that an aluminum layer (A8021 from Dongil Aluminum Co.) was used instead of the stainless steel layer.

### Comparative Example 2

A stainless steel pouch film for a secondary battery was manufactured in the same manner as the above Example 1, except that nylon (product from Kolon Co.) was used as the outer resin layer.

### Comparative Example 3

A stainless steel pouch film for a secondary battery was manufactured in the same manner as Example 1, except that the first surface and the second surface of the stainless steel layer were not chromate- and corona-treated.

### Comparative Example 4

A stainless steel pouch film for a secondary battery was manufactured in the same manner as Example 2, except that the first surface and the second surface of the stainless steel layer were not chromate- and corona-treated.

### Comparative Example 5

A stainless steel pouch film for a secondary battery was manufactured in the same manner as Example 1, except that the first surface and the second surface of the stainless steel layer were chromate-treated and no corona treatment was performed.

### Comparative Example 6

A stainless steel pouch film for a secondary battery was manufactured in the same manner as Example 2, except that the first surface and the second surface of the stainless steel layer were chromate-treated and no corona treatment was performed.

### Comparative Example 7

A stainless steel pouch film for a secondary battery was manufactured in the same manner as Example 1, except that the first surface and the second surface of the stainless steel layer were corona-treated and no chromate treatment was performed.

### Comparative Example 8

A stainless steel pouch film for a secondary battery was manufactured in the same manner as Example 2, except that the first surface and the second surface of the stainless steel layer were corona-treated and no chromate treatment was performed.

### Experimental Example 1. Evaluation of puncture strength

The puncture strength of the stainless steel pouch films for a secondary battery of the above Examples 1, 2 and Comparative Examples 2 to 8 and the aluminum pouch film for a secondary battery of Comparative Example 1 were evaluated.

Each of the pouch films was measured at 5 points at regular intervals. The puncture strength of the outermost layer was measured in the TD direction. The width of the pouch film was 30 mm, the speed was 200 mm/min, and the punch diameter was Φ mm during the measurement. It was determined that the higher the puncture strength, the better the durability, and the results are shown in Table 1 below.

### Experimental Example 2. Evaluation of insulation property

The insulation properties of the stainless steel pouch films for a secondary battery of the above Examples 1, 2 and Comparative Examples 2 to 8 and the aluminum pouch film for a secondary battery of Comparative Example 1 were evaluated.

Each of the pouch films was filled with an electrode assembly consisting of a positive electrode, a separator, and a negative electrode, and a LiPF₆ electrolyte solution (product of Lichem Co.), sealed, and stored at 85°C for 24 hours, and then the stainless steel layer on the upper surface of the electrode was artificially exposed to measure whether it was electrically insulated, and the results are shown in Table 1 below.

### Experimental Example 3. Evaluation of weather resistance

The weather resistance of the stainless steel pouch films for a secondary battery of the above Examples 1, 2 and Comparative Examples 2 to 8 and the aluminum pouch film for a secondary battery of Comparative Example 1 was evaluated.

Each of the pouch films was cut to 5X5cm and immersed in seawater with a salinity concentration of 3.5% at 85°C for 24 hours, and then the adhesive strength between the outer resin layer and the metal layer was measured as the strength at which it was maintained without decreasing, and the results are shown in Table 1 below.

### Experimental Example 4. Evaluation of high temperature adhesive strength

The adhesive strength of the stainless steel pouch films for a secondary battery of the above Examples 1 and 2 and Comparative Examples 2 to 8 and the aluminum pouch film for a secondary battery of Comparative Example 1 was evaluated. The experiment was conducted under an environment of a constant temperature of 85°C and a constant humidity for long-term reliability evaluation, and the results are shown in Table 1 below.

### Experimental Example 5. Evaluation of scratch resistance

The scratch resistance of the stainless steel pouch films for a secondary battery of the above Examples 1, 2 and Comparative Examples 2 to 8 and the aluminum pouch film for a secondary battery of Comparative Example 1 was evaluated.

To measure the surface hardness, an HB pencil was moved 50 mm along the surface of each pouch film under loads of 100, 300, and 500 g to determine whether there were any marks on the surface, and the results are shown in Table 1 below.

### Experimental Example 6. Evaluation of electrolyte resistance

The electrolyte resistance of the stainless steel pouch films for a secondary battery of the above Examples 1, 2 and Comparative Examples 2 to 8 and the aluminum pouch film for a secondary battery of Comparative Example 1 was evaluated.

Each of the pouch films was cut to 2.5 X 10 cm, placed in a test container along with a LiPF6 standard electrolyte solution and 1000 ppm distilled water, sealed, and then heated to 85°C. After 24 hours, the pouch films were sampled every 30 days and the peeling between the films was observed with the naked eye, and the results are shown in Table 1 below.

### Experimental Example 7. Evaluation of formability

For the pouch films manufactured in Examples and Comparative Examples, the cold drawing method (Mold size: 5 X 6 cm) was used to mold the films while changing the depth by 0.1 mm, and the occurrence of cracks at the corners and tops was measured.

The occurrence of cracks was determined by shining light on the molded product in a darkroom and observing the light leaking out through a microscope to confirm whether or not fine cracks occurred. Through this, the formability was evaluated by setting the molding depth where no cracks occurred as the limit molding depth.

**Table: 1**

| | Examp le 1 | Examp le 2 | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 | Compa rativ e Examp le 8 |
|---|---|---|---|---|---|---|---|---|---|---|
| Puncture strength (N) | 60.0 | 60.0 | 21.0 | 58.0 | 60.0 | 60.0 | 52.0 | 52.0 | 52.0 | 52.0 |
| Insulation property (G ohm) | 64.0 | 64.0 | 44.0 | 44.0 | 40.0 | 40.0 | 64.0 | 64.0 | 64.0 | 64.0 |
| Weather resistance (N/15mm) | 6.5 | 6.5 | 4.0 | 3.0 | 5.0 | 5.0 | 6.5 | 6.5 | 6.5 | 6.5 |
| High temperature adhesive strength (N/15mm) | 5.0 | 5.0 | 3.0 | 3.0 | 3.5 | 3.5 | 4.0 | 4.0 | 4.0 | 4.0 |
| Scratch resistance (g/50mm) | 150.0 | 150.0 | 100.0 | 100.0 | 150.0 | 150.0 | 150.0 | 150.0 | 150.0 | 150.0 |
| Electrolyte resistance (N/15mm) | 12.0 | 12.0 | 10.0 | 12.0 | 12.0 | 12.0 | 12.0 | 12.0 | 12.0 | 12.0 |
| Formability (mm) | 10.0 | 11.0 | 10.5 | 10.8 | 8.0 | 10.5 | 9.5 | 10.5 | 9.5 | 10.5 |

Through the results in the above Table 1, it can be seen that the stainless steel pouch film for a secondary battery of the present invention has excellent puncture strength, insulation property, weather resistance, high-temperature adhesive strength, scratch resistance, electrolyte resistance and formability by using stainless steel as the metal layer, and also improves insulation property, weather resistance, and high-temperature adhesive strength by performing chromate treatment and corona treatment on the stainless steel layer. In addition, it can be seen that it has excellent insulation properties, weather resistance, high-temperature adhesive strength, and scratch resistance by using polyethylene terephthalate as the outer resin layer.

In particular, in the case of Example 2, it could be seen that as the inorganic particles and amide slip agent are additionally used, the formability was further increased.

On the other hand, in the case of Comparative Example 1, as aluminum was used as the barrier layer, there was a problem that the puncture strength was reduced. In the case of Comparative Example 2, as the outer resin layer was made of nylon, there was a problem that weather resistance, high temperature adhesive strength, and scratch resistance were reduced.

In addition, in the case of Comparative Examples 3 and 4, there was a problem that insulation property and high temperature adhesive strength were reduced because chromate treatment was not performed.

In addition, in the case of Comparative Examples 5 to 8, there was a problem that insulation property, weather resistance, high-temperature adhesive strength, etc. were reduced depending on whether only one of chromate treatment and corona treatment was performed.

## Claims

1. A stainless steel pouch film for a secondary battery, comprising:
a stainless steel layer, any one of a first surface and a second surface being treated with chromate and corona;
an outer resin layer formed on the first surface of the stainless steel layer; and
an inner resin layer formed on the second surface of the stainless steel layer;
wherein the outer resin layer comprises polyethylene terephthalate.

2. The stainless steel pouch film for a secondary battery according to claim 1, wherein the thickness of the stainless steel layer is 20 to 150 µm.

3. The stainless steel pouch film for a secondary battery according to claim 1, wherein the stainless steel is an austenitic steel.

4. The stainless steel pouch film for a secondary battery according to claim 1, wherein the first surface and the second surface of the stainless steel layer are chromate- and corona-treated.

5. The stainless steel pouch film for a secondary battery according to claim 1, wherein the chromate treatment is performed by treating at least one of the first surface and the second surface of the stainless steel layer with an aqueous solution containing chromium ions (Cr³⁺).

6. The stainless steel pouch film for a secondary battery according to claim 1, wherein the corona treatment is performed after chromate treatment of at least one of the first surface and the second surface of the stainless steel layer.

7. The stainless steel pouch film for a secondary battery according to claim 1, wherein the outer resin layer contains polyethylene terephthalate, inorganic particles and an amide slip agent.

8. The stainless steel pouch film for a secondary battery according to claim 7, wherein the inorganic particles are contained at 50 to 400 ppm and the amide slip agent is contained at 50 to 400 ppm.

9. The stainless steel pouch film for a secondary battery according to claim 7, wherein the inorganic particles are at least one selected from the group consisting of spherical silicon beads, silica gel and spherical alumina silica.

10. The stainless steel pouch film for a secondary battery according to claim 7, wherein the amide slip agent comprises erucamide.

11. The stainless steel pouch film for a secondary battery according to claim 1, wherein the thickness of the inner resin layer is 20 to 100 um.

12. The stainless steel pouch film for a secondary battery according to claim 1, wherein the first adhesive layer is laminated between the stainless steel layer and the outer resin layer, and the second adhesive layer is laminated between the stainless steel layer and the inner resin layer.
